# EUROPEAN PATENT SPECIFICATION

(11) **EP 3 803 099 B1**
(45) Date of publication and mention of the grant of the patent: **28.10.2026**
(21) Application number: 19814707.6
(22) Date of filing: 22.05.2019
(51) Int. Cl.: F03B 17/06, F03D 1/06, F03B 13/26, B64C 27/473, B64C 27/467

(54) **ROTOR**
ROTOR
ROTOR

(30) Priority: 06.06.2018 FI 20187080
(43) Date of publication of application: 14.04.2021
(73) Proprietor: Bondestam, Marten, 02440 Luoma (FI)
(72) Inventor: Bondestam, Marten, 02440 Luoma (FI)
(74) Representative: Salomäki, Juha Kari Ensio
(86) International application number: PCT/FI2019/000008
(87) International publication number: WO 2019/234287

(56) References cited:
- JP-A- 2011 085 127
- US-A- 1 868 113
- US-A- 4 364 709
- US-A- 6 099 256
- US-A- 802 144
- US-B1- 7 448 337

## Description

This invention relates to a rotor consisting of canvas-like, wide loops which are connected to a rotor shaft and which form asymmetric, bag-like cones under the effect of wind or water currents.

Field of technology in which the invention is included.

Multiple types of oceanic turbines have been devised and constructed. Such turbines comprise a rotor or rotor-like parts. In this context, the rotating part of the turbine is referred to as the rotor and the turbine blades are called vanes. Prior art turbines use a hard material, such as steel as the vane material. They are also provided with a gear system, which adapts the rotation speed of the rotor to electricity production. These rotors are intended to produce electricity. These rotors have been observed to harm animals, such as fish, and for some reason they also generate harmful noise. Consequently, prohibition of these rotors has been suggested. Large rotors reduce sea currents in the oceans. When placed in wrong places, they may reduce the stream of important oceanic currents, thus worsening the climate. If a specific model has a low harmful impact on marine animals, it can be used in tidal currents. There are previously known ventilating rotors made of rubber, which are still sufficiently hard not to be deformed during rotation. They are completely soundless.

Because marine rotors made of a hard material harm marine life, rotors equipped with a protective net have been developed. Marine animals may still get caught in the protective net and be injured. This led us to the idea of a soft rotor. In the rotor field this is an unusual concept. By contrast, many types of soft constructions have been developed in the kite field.

Basic idea of the invention of the application.

In ancient times, people used multi-masted sailing ships. The vast sailing areas of these ships were based on the properties of the canvas. The construction of wind turbines aims at large units, operating on the same logics as sailing ships. There are known conical weather vanes and also conical very large kites. By utilising the shaping force of the wind or water currents, one can achieve an efficient rotor without other support structures than those used for attaching the moving canvas to the rotor shaft.

Prior art document US6099256A1 presents a propeller where a flat strip like member is forming figure eight with a pair of continuous loops. The material of the rotor structures is rigid or flexible.

Prior art document JP2011085127A presents a rotor where a loop or loops are attached from one point to the shaft and the loops are constructed of a stripe of a flexible material.

Prior art document US7448337B1 presents a soft rotor structure which is a sail, not a cone. The rotor structure includes solid/rigid mast structure, and the soft structure (sail) is attached to the mast and with a rope to the center of the windmill.

The characteristics of the rotor in accordance with the invention are defined in the claims.

The rotor vane of this application consists of a wide canvas loop. In a simple version, the loop-shaped vane resembles a cornet. The cornet is similar to a wind cone, through which the wind blows while the conical shape maintains its tension. When the rotor shaft is obliquely connected to this cone, a rotor-like rotation is generated. There are previously known conical kites, which remain stiff under the pressure produced inside by the wind. These flying wind cones have been examined, and they have been observed to generate a force that lifts three kites. The air current arriving obliquely from the lower side generates lifting. The air current directed to the upper side of the cone curves, so that an upward suction effect similar to aircraft wings is produced. The air jet passing through the obliquely downwards directed hole of the cone lifts the kite. The same factors work in water. Rotors have been tested both in water and in air. Rotors apparently have a market and are potentially useful in solving climate problems. The rotor of the invention does not harm marine animals when used as a marine rotor or an ordinary rotor. When used as a wind turbine, it does not harm birds or humans. A rotor is soundless both in water and air. A rotor can be less expensive than hard rotors and also have much smaller weight. The rotor vanes in the shape of a canvas loop can be stacked on a flat plane and are thus easy to transport. The rotor can be manufactured with extremely light weight and can thus operate in thin air or in any thin gas.

The invention is described below with the aid of examples and with reference to the accompanying drawings, in which:

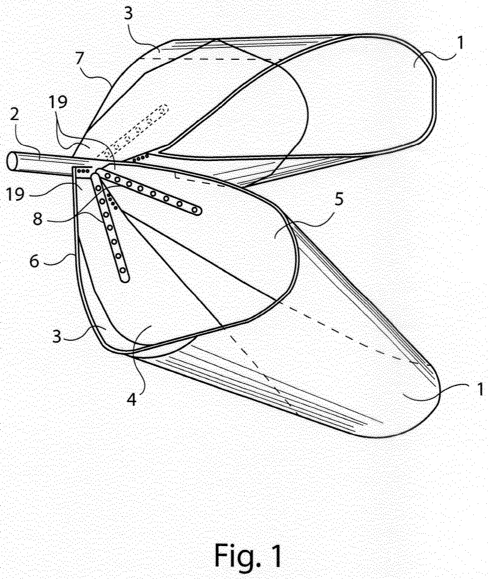

- Figure 1: is a lateral view of the rotor,
- figure 2: is a top view of the rotor loop on a flat substrate,
- figure 3: is a lateral view of the rotor with a water current passing through the vane,
- figure 4: is a top view of the same as figure 3,
- figure 5: is a lateral view of an example of the use of the rotor in the ocean, and
- figure 6: is a lateral view of the use of the rotor in a wind turbine.

### Tidal power plants

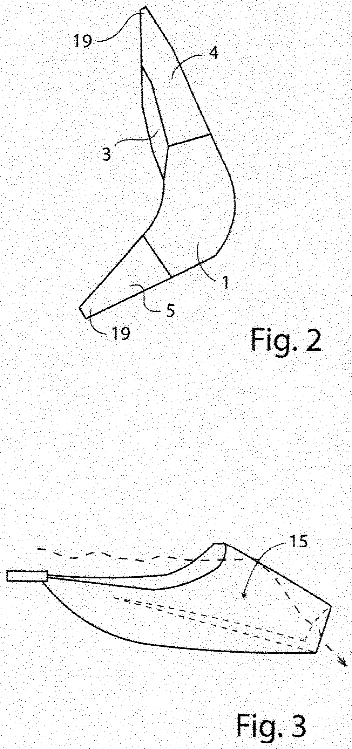

In this case, the rotor operates under the water or in the air. The rotor vanes are partly cones (15). Since the central part (1) of the cone (15) is oblique with regard to the sea current, the cone starts rotating around the shaft (2). For power production in the shaft (2), one side (4) of the cone (15) is larger and/or in a steeper angle to the propeller shaft (2). This is shown as a surface (3) in the figure. This makes the cone (15) withdraw outwards from the shaft (2). The conical loop (16) has a left and a right part (4) and (5). For the power from the soft cone (15) to be transmitted to the shaft (2), the parts (4) and (5) have reinforcements (8) and (9) which are solidly fixed to the shaft. The reinforcements (4) and (5) may have various shapes. A canvas or any similar soft material is attached to the reinforcements. They are at a distance from the front edges (6) and (7). The cone (1) proper may be sufficiently stiff under the water current so that no reinforcements will be necessary. The canvas proper or a similar material may be fixed with rivets or similar means to the shaft, being positioned against the shaft. The water current stiffens the cone, without making it hard. The rotor may have two or more vanes. The vane is partly a cone (2). A model with two vanes may be the most convenient solution. A model with three vanes equalizes the currents hitting the vanes and is thus used in wind turbines. Any marine animal or fish or other animal hitting the cone would not be injured. The canvas or any similar cone material can be mounted on the plane surface. This is illustrated in figure 2. Consequently, during the transport of the rotor to the site of operation, the cone canvases can be stacked and are thus space-saving.

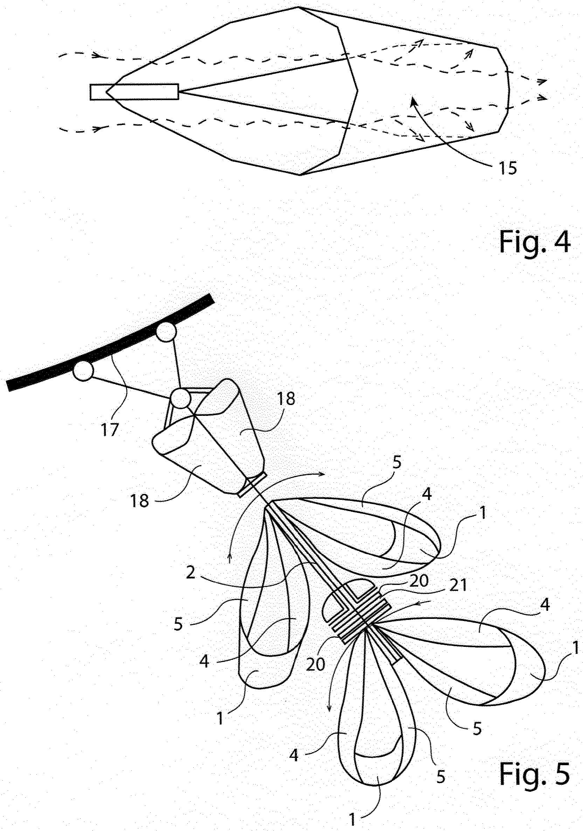

Figures 4 and 5 illustrate an example of a device in which two rotors of the invention are placed on the same shaft in succession but in opposite directions of rotation. The end of the shaft is connected to a wire (17) or the like. The rotors tend to rotate in opposite directions, and then the central shaft (2) does not rotate. Rotation of the wire (17) may also be prevented by various devices. In the figure, the angles of the two cones (18) shift immediately if the shaft (2) rotates slightly, thus preventing additional rotation. The exemplified device comprises two dynamos with their stator (21) including coils connected to the central shaft (2). Permanent magnets (20) are connected to the rotors. In such a construction, the conducts from the stator (19) do not require any slide contact. It is also possible to install permanent magnets (20) so as to produce several electric impulses during each rotation without using any gear system. Figure 5 shows such a device. Local currents in the oceans can be extremely strong.

Thus, for instance, off the coast of Tierra del Fuego, the water stream per hour is 100 times as strong as the total of the rivers of the entire planet. Electricity generated in this manner can prevent the climate change.

### Wind turbines

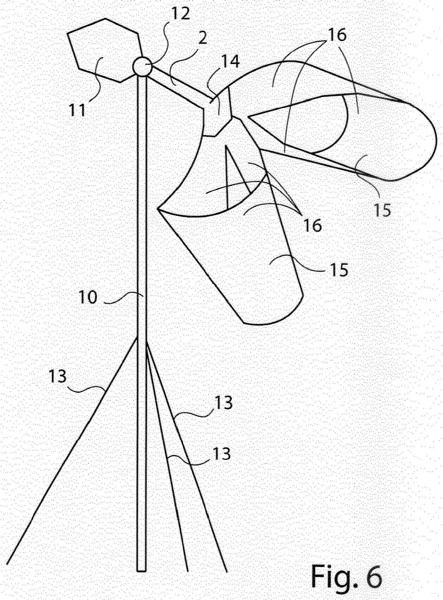

The rotor can also be used in wind turbines- as in figure 6. Wind turbines of a suitable size can be mounted in half an hour. It is also easy to transport. Operating in the air, it causes no noise. It can thus be placed in the neighbourhood of housing areas. Operating in the air, it would not be harmful to the environment, should the rotor break, since the canvas stripes hang down from the device, and should they come off, they are soft. This involves a great advantage, as the wind turbine can be placed near populated areas. The rotor has a softer shape than hard rotors and might have a more agreeable and less technical aspect. In figure 6, a rod (10) maintains the wind turbine in the air by means of joints (12), so that the device can rotate under the wind and oscillate also vertically. The joint has a drag for electricity transmission. The cones (15) integrated in the loops (16) rotate around the shaft (2) and are connected to this in a manner (14) allowing wind power to be transmitted to the shaft (2), which rotates an ordinary electric generator (11). Under excessively hard winds, the geometry of the cones (15) allows the vanes to deform and flatten so that the device as a whole remains intact.

### Propeller of a ship

This rotor can be adapted for installation as the propeller of a ship. This reduces the harmful effects of ships, such as injuries to animals and noise that disturbs animals. When used as the propeller of a ship, the cones shall be connected to the shaft at the other end as well, because the cone tends to move into a direction opposite to that of a marine power plant, for instance.

### Rotor of a helicopter

Owing to the extremely light weight and the noiselessness of the rotor of the invention made of canvas or having a similar design, it is apt for use as a rotor of a helicopter.

### Rotor of an autogyro

The rotor is apt for use in an autogyro. An autogyro is like a helicopter, but the wind generated by the forward movement of the engine makes the rotor rotate. This yield benefits of the same type as those of a helicopter.

### Rotor of a fan

There are various types of fans. There are noiseless fans equipped with a rubber-like rotor. Being simple and having a straightforward construction, the rotor of the invention is thus suitable for use with an inexpensive fan. It does not require any protective net because its soft material causes no damage. A lifting rotor is well adapted for use in a helicopter flying in thin atmosphere. Since the rotor of the invention can be manufactured with a very light weight and a large size, it seems possible to manufacture a flying device which flies in thin air or any other gas. It could fly to the stratosphere or on Mars.

### Rotor of hovercraft

Rotors are the weak point of hovercraft. Light weight and high effect is required of such rotors. The rotor of the invention can be manufactured with precisely these properties.

### Large-sized propeller for slow sea currents

The invention is suitable for use in exploitation of a large slow sea current in the production of electricity or it can be used to stop a sea current. There are probably sea currents that are harmful to the climate. A device similar to a rotor can be used for acting on such sea currents. The Greenland current, which stops the Golf stream, could thus be diminished and the Golf stream could be recovered, while generating electricity for Greenland, for instance.

### Parachute

A parachute which can be knocked down into a small space and forms the two-vane rotor of the invention when opened. When rotating, it equals a parachute of much larger size. There can be two rotors rotating into mutually opposite directions. There can also be a plurality of vanes if this is an advantage.

### Rotor producing rain

When the rotor cones are lifted high up in the air by means of a kite, a kytoon or a mast, they condense humid air into rain. The device can comprise some kind of cooling contributing to condensation.

## Claims

1. A rotor comprising rotor structures fixed to a rotor shaft (2), which rotor structures are loops (16, 18), wherein the rotor structures are of a soft material such as canvas or the like and the rotor structures are arranged to form asymmetrical bag-like cones (15) by themselves when an air or water current flows through the loops (16, 18), wherein the rotor shaft (2) is obliquely connected to the cones (15) so that a rotor-like rotation is generated, each cone (15) comprising a first side (4) and a second side (5), the first side (4) being larger than and/or forming a steeper angle relative to the rotor shaft (2) than the second side (5), and wherein the force of the cones (15) are transmitted to the rotor shaft (2) via reinforcements (8, 9) on the first and second sides (4, 5) of the cones, wherein the reinforcements (8,9) are solidly fixed to the rotor shaft (2).

2. A rotor according to claim 1, wherein the first side (4) of the cones (15) comprises at its front edge a surface (3) that is arranged to form the first side (4) of the cones (15) larger than the second side (5) and/or at a steeper angle to the rotor shaft (2).

3. A rotor according to claim 1 or 2, wherein the cones (15) are arranged to rotate the rotor shaft (2) when an air or water current flows through the cones (15).

4. A rotor according to any of the preceding claims, wherein the air current force or wind force is arranged to be transmitted from the cones (15) via the rotor shaft (2) to an electric generator (11).

## Patentansprüche

1. Rotor, umfassend Rotostrukturen, die an einer Rotorwelle (2) fixiert sind, wobei die Rotorstrukturen Schleifen (16, 18) sind, wobei die Rotorstrukturen aus einem weichen Material wie Segeltuch oder dergleichen bestehen und die Rotorstrukturen so angeordnet sind, dass sie eigenständig asymmetrische, beutelähnliche Konen (15) bilden, wenn ein Luft- oder Wasserstrom durch die Schleifen (16, 18) fließt, wobei die Rotorwelle (2) mit den Konen (15) schräg verbunden ist, sodass eine rotorähnliche Drehung erzeugt wird, wobei jeder Konus (15) eine erste Seite (4) und eine zweite Seite (5) umfasst, wobei die erste Seite (4) größer als die zweite Seite (5) ist und/oder einen steileren Winkel relativ zur Rotorwelle (2) bildet als diese, und wobei die Kraft der Konen (15) über Verstärkungen (8, 9) an der ersten und der zweiten Seite (4, 5) der Konen auf die Rotorwelle (2) übertragen wird, wobei die Verstärkungen (8,9) fest an der Rotorwelle (2) fixiert ist.

2. Rotor nach Anspruch 1, **wobei** die Konen (15) eine erste Seite (4) und eine zweite Seite (5) umfassen und die erste Seite (4) der Konen größer ist als die zweite Seite (5) und/oder einen steileren Winkel zur Rotorwelle (2) aufweist.

3. Rotor nach Anspruch 2, **wobei** die Konen (15) so angeordnet sind, dass sie die Rotorwelle (2) drehen, wenn ein Luft- oder Wasserstrom durch die Konen (15) fließt.

4. Rotor nach einem der vorhergehenden Ansprüche, **wobei** die Kraft des Luftstroms oder Windkraft für die Übertragung von den Konen (15) über die Rotorwelle (2) zu einem elektrischen Generator (11) angeordnet ist.

## Revendications

1. Rotor comprenant des structures de rotor fixées à un arbre de rotor (2), lesquelles structures de rotor sont des boucles (16, 18), dans lequel les structures de rotor sont réalisées dans un matériau souple tel que de la toile ou similaire, et sont agencées de manière à former d'elles-mêmes des cônes asymétriques en forme de sac (15) lorsqu'un courant d'air ou d'eau s'écoule à travers les boucles (16, 18) dans lequel l'arbre de rotor (2) est relié de manière oblique aux cônes (15) de sorte qu'une rotation de type rotor soit générée, chaque cône (15) comprenant un premier côté (4) et un second côté (5), le premier côté (4) étant plus grand que le deuxième côté (5) et/ou formant un angle plus aigu par rapport à l'arbre de rotor (2) que ce dernier, et dans lequel la force exercée par les cônes (15) est transmise à l'arbre de rotor (2) par l'intermédiaire de renforts (8, 9) situés sur les premier et deuxième côtés (4, 5) des cônes, les renforts (8, 9) étant solidement fixés à l'arbre du rotor (2).

2. Rotor selon la revendication 1, **dans lequel** les cônes (15) comportent une première face (4) et une deuxième face (5), et dans lequel la première face (4) des cônes est plus grande que la deuxième face (5) et/ou forme un angle plus aigu avec l'arbre du rotor (2).

3. Rotor selon la revendication 2, **dans lequel** les cônes (15) sont agencés de manière à faire tourner l'arbre du rotor (2) lorsqu'un courant d'air ou d'eau s'écoule à travers les cônes (15).

4. Rotor selon l'une quelconque des revendications précédentes, **dans lequel** la force du courant d'air ou force du vent est agencée pour être transmise depuis les cônes (15), via l'arbre du rotor (2), à un générateur électrique (11).
